# EUROPEAN PATENT APPLICATION

(11) **EP 4 235 377 A1**
(43) Date of publication of application: **30.08.2023**
(21) Application number: 22175874.1
(22) Date of filing: 27.05.2022
(51) Int. Cl.: G06F 3/048, G06N 3/02, G06Q 30/02

(54) **CHURN PREDICTION USING CLICKSTREAM DATA**

(30) Priority: 28.02.2022 US 202217683108
(71) Applicant: Intuit Inc., Mountain View, CA 94043 (US)
(72) Inventor: JAIN, Rohit, Mountain View, 94043 (US); RAMAKRISHNAN, Rohith, Mountain View, 94043 (US)
(74) Representative: D Young & Co LLP

(57) **Abstract**

A method implements churn prediction using clickstream data. The method includes receiving clickstream data of a user and converting the clickstream data to a token list. The method further includes processing the token list with a first recurrent layer, a second recurrent layer, and an attention layer of a machine learning model to generate a churn risk. The method further includes executing a reactivation action in response to the churn risk.

## Description

### CROSS REFERENCE TO RELATED APPLICATIONS

This application is related to US Application titled "CHURN PREVENTION USING GRAPHS" [Attorney Docket number 37202/908001; 2212294US], filed February 28, 2022, which is incorporated herein by reference.

### BACKGROUND

An application is software that executes and provides services to users. When a user believes that the application does not satisfy the user's needs, believes that the application is too complicated, or becomes frustrated with the application, the user stops using the application. The stopping use of the application is referred to as churn. Users may churn from an application by not returning to the application. A challenge is to predict which users that may, in the future, churn from an application and reduce the rate of churn.

### SUMMARY

Particular aspects are set out in the appended independent claims. Various optional embodiments are set out in the dependent claims.

In general, in one or more aspects, the disclosure relates to a method that implements churn prediction using clickstream data. The method includes receiving clickstream data of a user and converting the clickstream data to a token list. The method further includes processing the token list with a first recurrent layer, a second recurrent layer, and an attention layer of a machine learning model to generate a churn risk. The method further includes executing a reactivation action in response to the churn risk.

In general, in one or more aspects, the disclosure relates to a system that includes a machine learning model configured to generate a churn risk from clickstream data, an action controller configured to execute a reactivation action, and a server application executing on one or more servers. The server application is configured for receiving the clickstream data of a user and converting the clickstream data to a token list. The server application is further configured for processing the token list through a first recurrent layer, a second recurrent layer, and an attention layer of the machine learning model to generate the churn risk. The server application is further configured for executing, by the action controller, the reactivation action in response to the churn risk.

In general, in one or more aspects, the disclosure relates to a method of churn prediction using clickstream data. The method includes receiving clickstream data of a user and converting the clickstream data to a token list. The method further includes processing the token list with a first recurrent layer, a second recurrent layer, and an attention layer of a machine learning model to generate a churn risk. The method further includes executing a reactivation action in response to the churn risk to adjust a user interface displayed on a user device.

Other aspects of the presently taught approaches will be apparent from the following description and the appended claims.

### BRIEF DESCRIPTION OF DRAWINGS

Figure 1 shows a diagram of systems in accordance with disclosed embodiments.
Figure 2 shows a flowchart in accordance with disclosed embodiments.
Figure 3A, Figure 3B, and Figure 3C show examples in accordance with disclosed embodiments.
Figure 4A and Figure 4B show computing systems in accordance with disclosed embodiments.

### DETAILED DESCRIPTION

Specific embodiments of the present approaches will now be described in detail with reference to the accompanying figures. Like elements in the various figures are denoted by like reference numerals for consistency.

In the following detailed description of embodiments, numerous specific details are set forth in order to provide a more thorough understanding of the present teachings. However, it will be apparent to one of ordinary skill in the art that the presently taught approaches may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, embodiments of the disclosure implement churn prediction using clickstream data. For example, a user accesses a system, e.g., a software application, to use the services offered through the application. The system tracks clickstream data (keyboard events, mouse movements, notifications, etc.) of users accessing the system. Based on the clickstream data, the system makes a prediction of whether the user will continue to access the system. If the system determines that the user will not access the system in the future, the system may take action to reengage the user with the system by performing a reactivation action. For example, the system may send an email if the user is offline or adjust the display of the user interface if the user is online.

The system predicts the churn risk, i.e., the risk that a user will not access the system in the future. To determine the churn risk, the clickstream data is converted to lists of tokens, i.e., token lists. The token lists are processed using a machine learning model, which includes multiple layers, to generate the churn risk. In one embodiment, the machine learning model includes multiple recurrent network layers and at least one attention layer. The churn risk identifies a probability (from 0 to 1) that a user will churn out of the system. A user churns out if the user does not access the system during a specified period of time (e.g., 30 days). If the churn risk satisfies a threshold (e.g., above 0.3 or 30%), the system may identify a reactivation action to take to increase the likelihood that a user will continue to access the system.

The figures show diagrams of embodiments that are in accordance with the disclosure. The embodiments of the figures may be combined and may include or be included within the features and embodiments described in the other figures of the application. The features and elements of the figures are, individually and as a combination, improvements to the technology of churn prediction. The various elements, systems, components, and steps shown in the figures may be omitted, repeated, combined, and/or altered as shown from the figures. Accordingly, the scope of the present disclosure should not be considered limited to the specific arrangements shown in the figures.

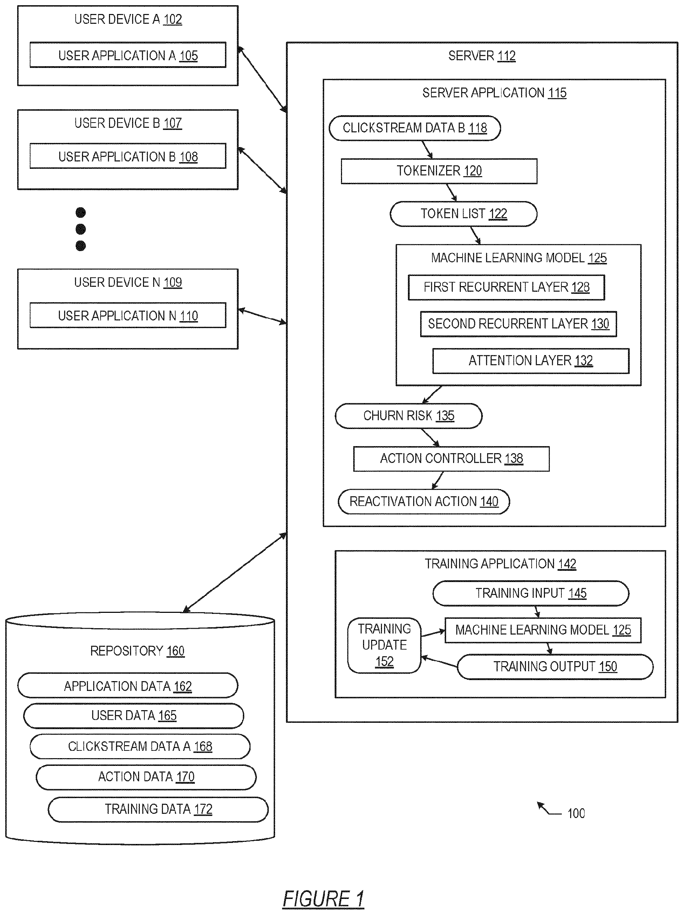

Turning to Figure 1, the system (100) implements churn prediction using clickstream data. Users operate the user devices A (102), B (107), and N (109) to access applications, websites, services, etc., that may be hosted by the server (112). Access by the users is recorded in the clickstream data A (168) that is stored in the repository (160). The server (112) processes the clickstream data B (118) (a subset, for a user, of the clickstream data A (168)) to identify the churn risk (135) for the user. If the churn risk for a user satisfies a threshold, the server (112) may identify and execute the reactivation action (140) (e.g., update a view of a web page, send an email, etc.). The system (100) includes the user devices A (102), B (107), and N (109), the server (112), and the repository (160).

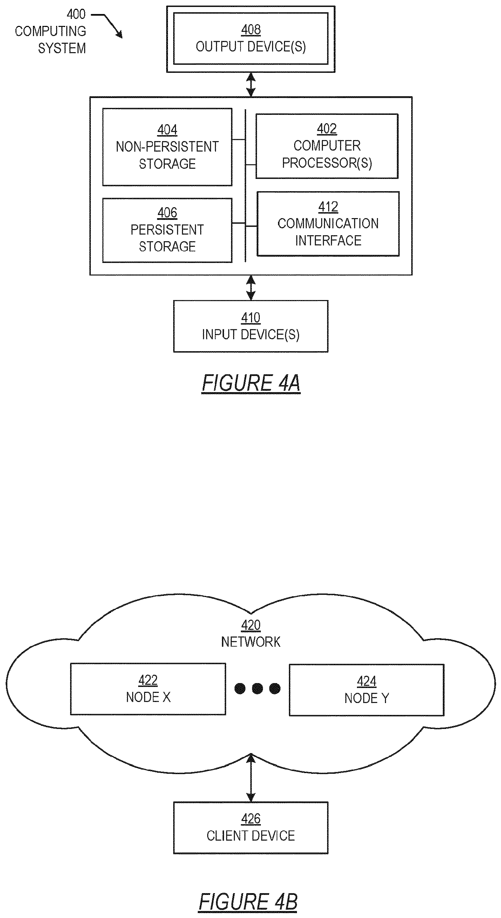

The server (112) is a computing system (further described in Figure 4A). The server (112) may include multiple physical and virtual computing systems that form part of a cloud computing environment. In one embodiment, execution of the programs and applications of the server (112) is distributed to multiple physical and virtual computing systems in the cloud computing environment. The server (112) includes the server application (115) and the training application (142).

The server application (115) is a collection of programs that may execute on multiple servers of a cloud environment, including the server (112). The server application (115) generates the churn risk (135) and identifies the reactivation action (140) using the clickstream data B (118). In one embodiment, the server application (115) may host web applications accessed by users of the user devices A (102) through N (109). The web applications hosted by the server may be the target application for which churn risk is determined. In other embodiments, the target application for which churn risk is determined may be a local application executing on a user device. The web applications hosted by the server application (115) may serve structured documents (hypertext markup language (HTML) pages, extensible markup language (XML) pages, JavaScript object notation (JSON) files and messages, etc.). The server application (115) includes the tokenizer (120), the machine learning model (125), and the action controller (138).

The tokenizer (120) is a set of hardware and software components of the server application (115). The tokenizer (120) converts the clickstream data B (118) to the token list (122).

The clickstream data B (118) is a sequence of events (mouse events, keyboard events, notification events, etc.) for one user of the system (100). The clickstream data B (118) may include a threshold number of events (e.g., the 50 most recent events for a user).

The token list (122) is a list of tokens that correspond to the clickstream data B (118). In one embodiment, the tokens of the token list (122) correspond to events from the clickstream data B (118) with a one-to-one correspondence. The tokens of the token list (122) may be unique integers that correspond to the different types of events from the clickstream data A (168) (which include the clickstream data B (118)).

The machine learning model (125) is a set of hardware and software components of the server application (115) that processes the token list (122) using the first recurrent layer (128), the second recurrent layer (130), and the attention layer (132) to generate the churn risk (135). In one embodiment, the machine learning model (125) may include an embedding layer that converts the tokens of the token list to embedded vectors that form an embedded vector list that corresponds to the clickstream data B (118).

The first recurrent layer (128) and the second recurrent layer (130) are programs implementing recurrent neural network layers. Connections between nodes of recurrent neural networks may form a directed graph along a temporal sequence (e.g., the sequence of events from the clickstream data B (118)). Recurrent neural networks may be used to predict the next value of a temporal sequence. The first recurrent layer (128) and the second recurrent layer (130) may include different numbers of nodes and may be implemented using long short-term memories (LSTMs), gated recurrent units (GRUs), bidirectional recurrent neural networks, etc. Bidirectional recurrent neural networks (BRNNs) connect two hidden layers of opposite directions to an output. The output layer of a bidirectional recurrent neural network may get information from past (backwards) and future (forward) states simultaneously. In one embodiment, the first recurrent layer (128) is a bidirectional LSTM with 512 nodes and the second recurrent layer (130) is a bidirectional LSTM with 256 nodes. The output of the first recurrent layer (128) is input to the second recurrent layer (130). The output from the second recurrent layer (130) is input to the attention layer (132).

The attention layer (132) is a program implementing an attention mechanism to relate different positions of a single sequence in order to compute a representation of the same sequence. In one embodiment, the attention layer (132) is implemented as a self attention layer.

The churn risk (135) is output from the machine learning model (125) that is a prediction of churn for a user. In one or more embodiments, the churn prediction is a prediction of probability of future churn based on the user's clickstream data. The churn risk (135). In one embodiment, the churn risk (135) is a floating point value from 0 to 1 with "0" indicating a low risk of churn (i.e., that the user will continue to access the system (100) in the future) and "1" indicating a high risk of churn (i.e., that the user will likely not access the system (100) in the future). The churn risk (135) is input to the action controller (138).

The action controller (138) processes the churn risk (135) to identify the reactivation action (140). In one embodiment, the action controller (138) compares the churn risk (135) to a threshold value (e.g., 0.35) and identifies the reactivation action (140) when the threshold value is satisfied (e.g., the churn risk (135) is greater than the threshold value).

The reactivation action (140) is an action that, when executed by the system (100), reduces the likelihood a user will churn out and not use the system (100) in the future. The reactivation action (140) may be selected from the action data (170), which is stored in the repository (160).

In one embodiment, the clickstream data B (118) is received and processed in real time during a user session while accessing the system. When the clickstream data B (118) is processed in real time, the reactivation action (140) may include altering the user interface displayed to the user through, e.g., the user application A (105) of the user device A (102).

In one embodiment, the clickstream data B (118) is not processed in real time, e.g., at a periodic time. When the clickstream data B (118) is not processed in real time, the user may not be engaged in an active session. The reactivation action (140) may include a message (e.g., an email) that may be sent to the user and displayed with, e.g., the user application A (105) of the user device A (102).

The training application (142) is a collection of programs that may execute on multiple servers of a cloud environment, including the server (112). The training application (142) trains the machine learning model (125) to generate the churn risk (135) using the clickstream data B (118).

During training, the machine learning model (125) receives a training vector generated from the training input (145) and generates the training output (150). The machine learning model (125) may include weights and parameters that are applied to the training vectors that are input to the machine learning model (125) to calculate the training output (150).

The training input (145) is from the training data (172), which includes data for training the machine learning model (125). In one embodiment, the training input (145) includes a set of clickstream data events, with a corresponding label, from previous interactions with the system (100) by a user. The label identifies whether the user that generated the events in the subset of the clickstream data A (168) had churned out of the system (100), e.g., did not access the system (100) for a threshold length of time (e.g., the last 30 days).

The training output (150) is the output from the machine learning model (125) in response to the training input (145). The training output (150) is a churn risk, referred to as a training churn risk.

The training update (152) are updates to the machine learning model (125) generated in response to the training output (150). In one embodiment, the training churn risk (from the training output (150)) is compared to a label from the training input (145) to identify differences between the training churn risk and the label. The differences form the training update (152), which may be applied to the machine learning model (125) using backpropagation.

The user devices A (102) and B (107) through N (109) are computing systems (further described in Figure 4A). For example, the user devices A (102) and B (107) through N (109) may be desktop computers, mobile devices, laptop computers, tablet computers, server computers, etc. The user devices A (102) and B (107) through N (109) include hardware components and software components that operate as part of the system (100). The user devices A (102) and B (107) through N (109) communicate with the server (112) to access and manipulate information, including the application data (162). The user devices A (102) and B (107) through N (109) may communicate with the server (112) using standard protocols and file types, which may include hypertext transfer protocol (HTTP), HTTP secure (HTTPS), transmission control protocol (TCP), internet protocol (IP), hypertext markup language (HTML), extensible markup language (XML), etc. The user devices A (102) and B (107) through N (109) respectively include the user applications A (105) and B (108) through N (110).

The user applications A (105) and B (108) through N (110) may each include multiple programs respectively running on the user devices A (102) and B (107) through N (109). The user applications A (105) and B (108) through N (110) may be native applications, web applications, embedded applications, etc. In one embodiment the user applications A (105) and B (108) through N (110) include web browser programs that display web pages from the server (112). In one embodiment, the user applications A (105) and B (108) through N (110) provide graphical user interfaces that display financial management software and services hosted by the system (100).

As an example, the user application A (105) be used by a user to view account information hosted by the system (100). Some of the account information may be incorrect and the system may prompt the user to correct the account information.

The repository (160) is a computing system that may include multiple computing devices in accordance with the computing system (400) and the nodes (422) and (424) described below in Figures 4A and 4B. The repository (160) may be hosted by a cloud services provider that also hosts the server (112). The cloud services provider may provide hosting, virtualization, and data storage services as well as other cloud services and to operate and control the data, programs, and applications that store and retrieve data from the repository (160). The data in the repository (160) includes the application data (162), the user data (165), the clickstream data A (168), the action data (170), and the training data (172).

The application data (162) includes information that is accessed by users of the system (100). In one embodiment, the application data (162) includes financial information related to financial accounts of the users of the system (100).

The user data (165) includes information that describes the users of the system (100). The user data (165) may include use your profile information, which may include values for the username of a user and settings for an application accessed by the user through the system (100).

In one embodiment, the clickstream data A (168) includes the events generated by the users of the system (100) when accessing the system (100) and the applications hosted by the system (100). The events of the clickstream data A (168) include keyboard events, mouse events, notification events, etc. Notification events include displaying success or failure codes encountered while using the system (100).

The action data (170) defines the actions the system may execute to increase the likelihood that a user will continue to access the system. The actions may include adjusting the layout of the user interface of the application that users are viewing and may include sending electronic messages to the users of the system (100).

The training data (172) may include raw data gathered by the system from previous interactions with users. In one embodiment, the training data (172) may include the vectors generated from the previous interactions and inputs to the machine learning model (125).

Although shown using distributed computing architectures and systems, other architectures and systems may be used. In one embodiment, the server application (115) may be part of a monolithic application that implements churn prediction using clickstream data. In one embodiment, the user applications A (105) and B (108) through N (110) may be part of a monolithic applications that implement churn prediction using clickstream data without the server application (115).

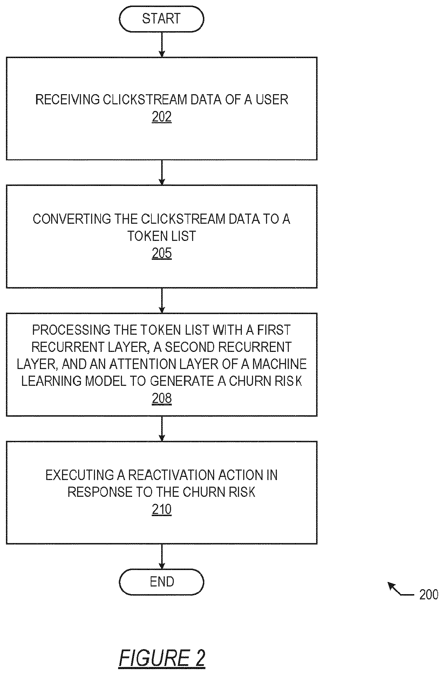

Turning to Figure 2, the process (200) implements churn prediction using clickstream data. The process (200) may be performed by a computing system, such as the computing system (400) of Figure 4A.

At Step 202, clickstream data of a user is received. In one embodiment, the clickstream data includes a threshold number (e.g., 100 of the most recent events generated by the user. The clickstream data may be retrieved from a clickstream database that stores the clickstream data for the different users of the system.

At Step 205, the clickstream data is converted to a token list. In one embodiment, the events from the clickstream data are converted to tokens in the token list. One event may correspond to one token and a token may be a unique positive integer that identifies a particular event. In one embodiment, integers are mapped to events, with each different type of event having a different integer.

In one embodiment, the clickstream data is tokenized to generate the token list. The clickstream data may be tokenized by identifying an integer corresponding to an event from the clickstream data and storing the integer as a token in the token list.

At Step 208, the token list is processed with a first recurrent layer, a second recurrent layer, and an attention layer of a machine learning model to generate a churn risk. The machine learning model may include additional layers including an embedding layer and a fully connected layer.

In one embodiment, the token list is converted to an embedded vector list using an embedding layer of the machine learning model. The tokens of the token list may be converted to embedded vectors that represent the tokens. In one embodiment, an embedded vector for a token includes multiple dimensions (e.g., (200) dimensions) with each dimension having a floating-point value. The embedding layer may be trained separately from the other layers of the machine learning model.

In one embodiment, an embedded vector list is processed with a first recurrent layer, of the machine learning model, to generate a first recurrent output. In one embodiment, the first recurrent layer is a bidirectional long short-term memory.

In one embodiment, a first recurrent output is processed with a second recurrent layer, of the machine learning model, to generate a second recurrent output. In one embodiment, the second recurrent layer is a bidirectional long-short term memory, which may have different parameters (e.g., a different number of nodes) than the first recurrent layer.

In one embodiment, a second recurrent output by is processed with an attention layer, of the machine learning model, to generate an attention output vector. The attention layer may be a self attention layer that relates different positions of a single sequence in order to compute a representation of the sequence.

In one embodiment, an attention output vector is processed with a dense layer, of the machine learning model, to generate the churn risk. The dense layer may include multiple layers that are fully connected with each output of a subsequent layer being connected to the inputs of a previous layer.

In one embodiment, the machine learning model is trained to generate the churn risk from the token list. The machine learning model may be trained using backpropagation. In backpropagation is a machine learning technique used to train feed forward neural networks. In one embodiment, backpropagation computes the gradient of the loss function with respect to the weights of the network for a single input-output example. For example, the error between the output of the machine learning model and a label of a training input is identified backpropagated through the layers of the machine learning model. In one embodiment, the backpropagation algorithm works by computing the gradient of the loss function with respect to each weight by the chain rule, computing the gradient one layer at a time, iterating backward from the last layer to avoid redundant calculations of intermediate terms in the chain rule.

At Step 210, a reactivation action is executed in response to the churn risk. The reactivation action may be executed by the server performing the process (200).

In one embodiment, executing the reactivation action includes transmitting a message to the user with a link to a website. For example, after identifying a churn risk satisfies a threshold, a message (e.g., an email) may be generated requesting a user to access the system. The message may be sent to the user device of a user and displayed by a user application executing on the user device.

In one embodiment, executing the reactivation action includes adjusting a user interface of the application. For example, the user may be accessing a web application that is displayed on a user application (e.g., a web browser) executing on a user device. After identifying the churn risk satisfies a threshold, the server may send a message to the user device that updates display of the web application on the user device. Updates to the display may include changing the location and size of the user interface elements displayed for the web application.

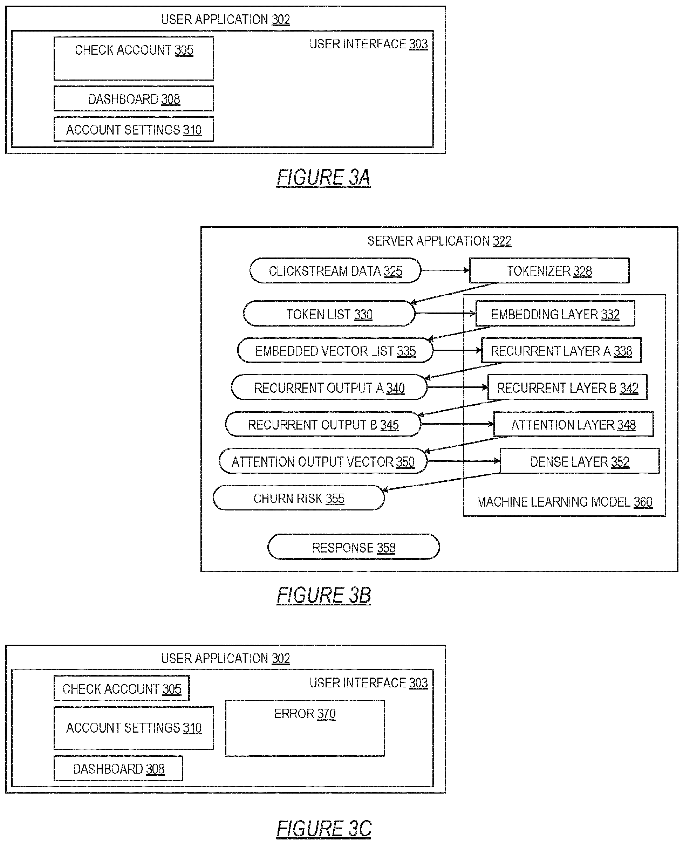

Figures 3A through 3C, systems and methods for churn prediction using clickstream data are depicted. Figure 3A depicts a user interface of the user application (302) of a user accessing a website that is part of a web application. Figure 3B depicts programs and data of the server application (322) that calculate a churn risk based on access to the website. Figure 3C depicts updates to the user interface of the user application (302) in response to the churn risk (355) (of Figure 3B).

Turning to Figure 3A, the user application (302) displays the user interface (303). The user interface (303) includes the check account button (305), the dashboard button (308) and the account settings button (310). The check account button (305) is larger than and displayed above the dashboard button (308) and the account settings button (310).

Selecting the check account button (305) transmits a message to the server application (322) (of Figure 3B) to request the status of an account of a user. A user may select the check account button (305) to request the system to verify that an account is properly set up with the system.

Selecting the dashboard button (308) transitions the user interface to a different view that displays a dashboard. The dashboard may display information about the account of the user.

Selecting the account settings button (310) transitions the user interface to a settings view. In the settings view, the user may interact with user interface elements to update settings for the account of the user maintained by the system.

Turning to Figure 3B, the server application (322) generates the response (358) based on the churn risk (355) using the machine learning model (360) after the user selects the check account button (305) (of Figure 3A) in the user interface (303) (of Figure 3A). To calculate the churn risk (355), the server application (322) processes the clickstream data (325) with the machine learning model (360). The machine learning model (360) includes the embedding layer (332), the recurrent layer A (338), the recurrent layer B (342), the attention layer (348), and the dense layer (352). In one embodiment, the machine learning model (360) is a neural network model that generates the churn risk (355) in response to the clickstream data (325).

The clickstream data (325) may be retrieved from a repository and includes a threshold number of most recent clickstream events for the user operating the user application (302) (of Figure 3A). The clickstream data (325) is input to the tokenizer (328).

The tokenizer (328) processes the clickstream data (325) to generate the token list (330). The token list (330) is a list of tokens that correspond to the events from the clickstream data (325). In one embodiment, the token list (330) is a list of 50 tokens that represent the most recent 50 events from the clickstream data (325). In one embodiment, a token of the token list (330) is unsigned integer that uniquely identifies events of the same type from the clickstream data (325). Different events, which are of the same type, may be identified with different tokens having the same value. The token list (330) is input to the embedding layer (332).

The embedding layer (332) processes the token list (330) to generate the embedded vector list (335). The embedded vector list (335) is a list of embedded vectors that correspond to the tokens of the token list (330) in the same sequential order as the token list (330). The number of embedded vectors in the embedded vector list (335) is the same as the number of tokens in the token list (330). An embedded vector, from the embedded vector list (335), includes multiple dimensions that each have a floating-point value. An embedded vector corresponds to a token. Embedded vectors with the same values correspond to tokens that have the same values. The embedded vector list (335) is input to the recurrent layer A (338).

The recurrent layer A (338) is a recurrent neural network layer that predicts the next value in a sequence of values. In one embodiment, the recurrent layer A (338) is a bidirectional long short-term memory with (512) nodes. The nodes of the recurrent layer A (338) process values that correspond to different embedded vectors from the embedded vector list (335). The recurrent layer A (338) generates the recurrent output A (340). The recurrent output A (340) is input to the recurrent layer B (342).

The recurrent layer B (342) is another recurrent neural network layer. In one embodiment, the recurrent layer B (342) is a bidirectional long short-term memory with a different number of nodes than that of the recurrent layer A (338). In one embodiment, the recurrent layer B (342) includes (256) nodes. The recurrent layer B (342) generates the recurrent output B (345). The recurrent output B (345) is input to the attention layer (348).

The attention layer (348) is a self attention layer of a neural network of the machine learning model (360). The attention layer (348) focuses the attention of the machine learning model (360) onto the determinant values in the current output B (345). The attention layer (348) processes the recurrent output B (345) by generating an attention vector that is combined (e.g., added and normalized) with the recurrent output B (345) to generate the attention output vector (350). The attention output vector (350) is input to the dense layer (352).

The dense layer (352) processes the attention output vector (350) to generate the churn risk (355). In one embodiment, the dense layer (352) is a fully connected layer that includes weights corresponding to each value in the attention output vector (350).

After generating the churn risk (355), the server application (322) identifies that the churn risk (355) satisfies a threshold. For example, the churn risk (355) may have a value of 0.55, which is greater than a threshold of 50%, which indicates that the user is more likely than not to churn out and not access the system in the future.

The response (358) is a response to the request generated when the user of the user application (302) (of Figure 3A) selected the check account button (305). In one embodiment, the system identified that the account being checked is not properly set up. After identifying that the churn risk (355) satisfies the threshold, the server application (322) modifies the response (358) to adjust the user interface (303) (of Figure 3C) when the result from checking the account is displayed by the user application (302) (of Figure 3C).

Turning to Figure 3C, the user interface (303) of the user application (302) is updated after receiving the response (358) (of Figure 3B). The user interface (303) is updated to display the error (370) and to adjust the size and locations of the buttons (305), (308), and (310).

The error (370) provides an indication to the user that the account that was checked, in response to selection of the check account button (305), is not set up correctly. In this situation, the account settings button (310) is enhanced.

The account settings button (310) is enhanced by increasing the size of the account settings button (310) relative to the buttons (305) and (308) and by moving the account settings button (310) above the dashboard button (308). Enhancing the account settings button (310) increases the likelihood that the user will select the account settings button (310) as opposed to the dashboard button (308). Selecting the account settings button (310) after displaying the error (370) may correspond with users having a higher likelihood of continuing to access the system in the future.

The dashboard button (308) is demoted by moving it below the account settings button (310). Demoting the dashboard button (308) decreases the likelihood that a user will select the dashboard button (308). Selecting the dashboard button (308) after displaying the error (370) may correspond with users that churn out and have a lower likelihood of continuing to access the system in the future.

Embodiments may be implemented on a computing system. Any combination of a mobile, a desktop, a server, a router, a switch, an embedded device, or other types of hardware may be used. For example, as shown in Figure 4A, the computing system (400) may include one or more computer processor(s) (402), non-persistent storage (404) (e.g., volatile memory, such as a random access memory (RAM), cache memory), persistent storage (406) (e.g., a hard disk, an optical drive such as a compact disk (CD) drive or a digital versatile disk (DVD) drive, a flash memory, etc.), a communication interface (412) (e.g., Bluetooth interface, infrared interface, network interface, optical interface, etc.), and numerous other elements and functionalities.

The computer processor(s) (402) may be an integrated circuit for processing instructions. For example, the computer processor(s) (402) may be one or more cores or micro-cores of a processor. The computing system (400) may also include one or more input device(s) (410), such as a touchscreen, a keyboard, a mouse, a microphone, a touchpad, an electronic pen, or any other type of input device.

The communication interface (412) may include an integrated circuit for connecting the computing system (400) to a network (not shown) (e.g., a local area network (LAN), a wide area network (WAN) such as the Internet, a mobile network, or any other type of network) and/or to another device, such as another computing device.

Further, the computing system (400) may include one or more output device(s) (408), such as a screen (e.g., a liquid crystal display (LCD), a plasma display, a touchscreen, a cathode ray tube (CRT) monitor, a projector, or other display device), a printer, an external storage, or any other output device. One or more of the output device(s) (408) may be the same or different from the input device(s) (410). The input and output device(s) (410 and (408)) may be locally or remotely connected to the computer processor(s) (402), non-persistent storage (404), and persistent storage (406). Many different types of computing systems exist, and the aforementioned input and output device(s) (410 and (408)) may take other forms.

Software instructions in the form of computer readable program code to perform embodiments may be provided by way of a computer-readable medium. A computer readable medium may be a computer-readable storage medium or a computer-readable transmission medium. A computer-readable medium may store such instructions, in whole or in part, temporarily or permanently, on a non-transitory computer readable medium such as a CD, a DVD, a storage device, a diskette, a tape, flash memory, physical memory, or any other computer readable storage medium. A computer-readable transmission medium may convey such instructions, in whole or in part, using a transient medium such as a carrier wave or transmission signal. A computer-readable transmission medium may occur between components of a single computer system and/or between plural separate computer systems. Specifically, the software instructions may correspond to computer readable program code that, when executed by a processor(s), is configured to perform one or more embodiments.

The computing system (400) in Figure 4A may be connected to or be a part of a network. For example, as shown in Figure 4B, the network (420) may include multiple nodes (e.g., node X (422), node Y (424)). Each node may correspond to a computing system, such as the computing system (400) shown in Figure 4A, or a group of nodes combined may correspond to the computing system (400) shown in Figure 4A. By way of an example, embodiments may be implemented on a node of a distributed system that is connected to other nodes. By way of another example, embodiments may be implemented on a distributed computing system having multiple nodes, where one or more portions of presently taught approaches may be located on a different node within the distributed computing system. Further, one or more elements of the aforementioned computing system (400) may be located at a remote location and connected to the other elements over a network.

Although not shown in Figure 4B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (422), node Y (424)) in the network (420) may be configured to provide services for a client device (426). For example, the nodes may be part of a cloud computing system. The nodes may include functionality to receive requests from the client device (426) and transmit responses to the client device (426). The client device (426) may be a computing system, such as the computing system (400) shown in Figure 4A. Further, the client device (426) may include and/or perform all or a portion of one or more embodiments

The computing system (400) or group of computing systems described in Figures 4A and 4B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (e.g., a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data sharing techniques described in the present application, between processes without departing from the scope. The processes may be part of the same or different application and may execute on the same or different computing system.

Rather than or in addition to sharing data between processes, the computing system performing one or more embodiments may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments, may extract one or more data items from the obtained data. For example, the extraction may be performed as follows by the computing system (400) in Figure 4A. First, the organizing pattern (e.g., grammar, schema, layout) of the data is determined, which may be based on one or more of the following: position (e.g., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as XML).

The extracted data may be used for further processing by the computing system. For example, the computing system (400) of Figure 4A, while performing one or more embodiments, may perform data comparison. Data comparison may be used to compare two or more data values (e.g., A, B). For example, one or more embodiments may determine whether A > B, A = B, A != B, A < B, etc. The comparison may be performed by submitting A, B, and an opcode specifying an operation related to the comparison into an arithmetic logic unit (ALU) (i.e., circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, etc. By selecting the proper opcode and then reading the numerical results and/or status flags, the comparison may be executed. For example, in order to determine if A > B, B may be subtracted from A (i.e., A - B), and the status flags may be read to determine if the result is positive (i.e., if A > B, then A - B > 0). In one or more embodiments, B may be considered a threshold, and A is deemed to satisfy the threshold if A = B or if A > B, as determined using the ALU. In one or more embodiments, A and B may be vectors, and comparing A with B requires comparing the first element of vector A with the first element of vector B, the second element of vector A with the second element of vector B, etc. In one or more embodiments, if A and B are strings, the binary values of the strings may be compared.

The computing system (400) in Figure 4A may implement and/or be connected to a data repository. For example, one type of data repository is a database. A database is a collection of information configured for ease of data retrieval, modification, re-organization, and deletion. A Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (e.g., join, full join, count, average, etc.), sort (e.g., ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system (400) of Figure 4A may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents only a few examples of functions performed by the computing system (400) of Figure 4A and the nodes (e.g., node X (422), node Y (424)) and/ or client device (426) in Figure 4B. Other functions may be performed using one or more embodiments.

Therefore, from one perspective, there has been described a method for implementing churn prediction using clickstream data. The method includes receiving clickstream data of a user and converting the clickstream data to a token list. The method further includes processing the token list with a first recurrent layer, a second recurrent layer, and an attention layer of a machine learning model to generate a churn risk. The method further includes executing a reactivation action in response to the churn risk.

Further examples are set out in the following numbered clauses:
Clause 1. A method comprising: receiving clickstream data of a user; converting the clickstream data to a token list; processing the token list with a first recurrent layer, a second recurrent layer, and an attention layer of a machine learning model to generate a churn risk; and executing a reactivation action in response to the churn risk.
Clause 2. The method of clause 1, further comprising: executing the reactivation action to transmit a message to the user with a link to a website.
Clause 3. The method of clause 1 or 2, further comprising: executing the reactivation action to adjust a user interface of an application.
Clause 4. The method of clause 1, 2 or 3, further comprising: training the machine learning model to generate the churn risk from the token list.
Clause 5. The method of any preceding clause, further comprising: tokenizing the clickstream data to generate the token list.
Clause 6. The method of any preceding clause, further comprising: converting the token list to an embedded vector list using an embedding layer of the machine learning model.
Clause 7. The method of any preceding clause, further comprising: processing an embedded vector list with a first recurrent layer, of the machine learning model, to generate a first recurrent output.
Clause 8. The method of any preceding clause, further comprising: processing a first recurrent output with a second recurrent layer, of the machine learning model, to generate a second recurrent output.
Clause 9. The method of any preceding clause, further comprising: processing a second recurrent output by with an attention layer, of the machine learning model, to generate an attention output vector.
Clause 10. The method of any preceding clause, further comprising: processing an attention output vector with a dense layer, of the machine learning model, to generate the churn risk.
Clause 11. The method of any preceding clause, wherein the clickstream data comprises a plurality of events.
Clause 12. A system comprising: a machine learning model configured to generate a churn risk from clickstream data; an action controller configured to execute a reactivation action; a server application executing on one or more servers and configured for: receiving the clickstream data of a user; converting the clickstream data to a token list; processing the token list through a first recurrent layer, a second recurrent layer, and an attention layer of the machine learning model to generate the churn risk; and executing, by the action controller, the reactivation action in response to the churn risk.
Clause 13. The system of clause 12, wherein the server application is further configured for: executing, by the action controller, the reactivation action to transmit a message to the user with a link to a website.
Clause 14. The system of clause 12 or 13, wherein the server application is further configured for: executing, by the action controller, the reactivation action to adjust a user interface of an application.
Clause 15. The system of clause 12, 13 or 14, further comprising: a training application executing on the one or more servers and configured for: training the machine learning model to generate the churn risk from the token list.
Clause 16. The system of any of clauses 12 to 15, wherein the server application is further configured for: tokenizing the clickstream data to generate the token list.
Clause 17. The system of any of clauses 12 to 16, wherein the server application is further configured for: converting the token list to an embedded vector list using an embedding layer of the machine learning model.
Clause 18. The system of any of clauses 12 to 17, wherein the server application is further configured for: processing an embedded vector list with a first recurrent layer, of the machine learning model, to generate a first recurrent output.
Clause 19. The system of any of clauses 12 to 18, wherein the server application is further configured for: processing a first recurrent output with a second recurrent layer, of the machine learning model, to generate a second recurrent output.
Clause 20. A method comprising: receiving clickstream data of a user; converting the clickstream data to a token list; processing the token list with a first recurrent layer, a second recurrent layer, and an attention layer of a machine learning model to generate a churn risk; and executing a reactivation action in response to the churn risk to adjust a user interface displayed on a user device.

While the presently taught approaches have been described with respect to a limited number of embodiments, those skilled in the art, having benefit of this disclosure, will appreciate that other embodiments can be devised which do not depart from the scope of the teachings as disclosed herein. Accordingly, the scope of the invention should be limited only by the attached claims.

## Claims

1. A method comprising:
receiving clickstream data of a user;
converting the clickstream data to a token list;
processing the token list with a first recurrent layer, a second recurrent layer, and an attention layer of a machine learning model to generate a churn risk; and
executing a reactivation action in response to the churn risk.

2. The method of claim 1, further comprising:
executing the reactivation action to transmit a message to the user with a link to a website.

3. The method of claim 1 or 2, wherein:
the executing the reactivation action is performed to adjust a user interface of an application.

4. The method of claim 1, 2 or 3, wherein:
the executing the reactivation action is performed to adjust a user interface displayed on a user device.

5. The method of any preceding claim, further comprising:
training the machine learning model to generate the churn risk from the token list.

6. The method of any preceding claim, further comprising:
tokenizing the clickstream data to generate the token list.

7. The method of any preceding claim, further comprising:
converting the token list to an embedded vector list using an embedding layer of the machine learning model.

8. The method of any preceding claim, further comprising:
processing an embedded vector list with a first recurrent layer, of the machine learning model, to generate a first recurrent output.

9. The method of any preceding claim, further comprising:
processing a first recurrent output with a second recurrent layer, of the machine learning model, to generate a second recurrent output.

10. The method of any preceding claim, further comprising:
processing a second recurrent output by with an attention layer, of the machine learning model, to generate an attention output vector.

11. The method of any preceding claim, further comprising:
processing an attention output vector with a dense layer, of the machine learning model, to generate the churn risk.

12. The method of any preceding claim, wherein the clickstream data comprises a plurality of events.

13. A system comprising:
a machine learning model configured to generate a churn risk from clickstream data;
an action controller configured to execute a reactivation action;
a server application executing on one or more servers and configured for:
receiving the clickstream data of a user;
converting the clickstream data to a token list;
processing the token list through a first recurrent layer, a second recurrent layer, and an attention layer of the machine learning model to generate the churn risk; and
executing, by the action controller, the reactivation action in response to the churn risk.

14. The system of claim 13, further configured to perform the method of any of claims 1-12.

15. A computer-readable medium comprising instructions that, when executed by one or more processors of a computer system, cause the computer system to become configured to carry out the method of any of claims 1-12.
